# EUROPEAN PATENT APPLICATION

(11) **EP 4 679 510 A1**
(43) Date of publication of application: **14.01.2026**
(21) Application number: 23956687.0
(22) Date of filing: 22.12.2023
(51) Int. Cl.: H01M 4/02, H01M 50/46, H01M 10/04, H01M 50/103

(54) **BATTERY CELL, BATTERY, AND ELECTRICAL DEVICE**

(30) Priority: 23.10.2023 CN 202322835096 U
(71) Applicant: Contemporary Amperex Technology Co., Limited, Ningde, Fujian 352100 (CN)
(72) Inventor: ZHANG, Wenyan, Ningde, Fujian 352100 (CN); ZHONG, Wei, Ningde, Fujian 352100 (CN); GE, Xiaoming, Ningde, Fujian 352100 (CN); HUANG, Xian, Ningde, Fujian 352100 (CN)
(74) Representative: Ziebig Hengelhaupt Intellectual Property Attorneys Patentanwaltskanzlei PartGmbB
(86) International application number: PCT/CN2023/141054
(87) International publication number: WO 2025/086452

(57) **Abstract**

The present application belongs to the technical field of batteries, and provides a battery cell (20), a battery, and an electric device. The battery cell (20) includes a positive electrode sheet (25), a negative electrode sheet (26), and a separator (27). The positive electrode sheet (25) includes a positive electrode active material area (251); the negative electrode sheet (26) includes a negative electrode active material area (261); the negative electrode sheet (26) and the positive electrode sheet (25) are stacked along a first direction; the separator (27) is located between any adjacent positive electrode sheet (25) and negative electrode sheet (26); and a projection of the negative electrode sheet (26) on a first plane (28) perpendicular to the first direction completely falls within the range of a projection of the positive electrode sheet (25) on the first plane (28), and a projection of the positive electrode active material area (251) on the first plane (28) falls within the range of a projection of the negative electrode active material area (261) on the first plane (28).

## Description

### CROSS REFERENCE

The present application makes reference to Chinese Patent Application No. 202322835096.0 filed on October 23, 2023 and entitled "Battery Cell, Battery, and Electric Device", which is incorporated herein by reference in its entirety.

### TECHNICAL FIELD

The present application relates to the field of battery technologies, and in particular, to a battery cell, a battery, and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, a battery technology is an important factor for the development thereof.

During charging and discharging of a battery, the battery cell may expand, which affects the reliability of the battery. In the development of battery technologies, how to improve the reliability of a battery is a technical problem to be solved in the battery technologies.

### SUMMARY

The present application aims to solve at least one of the technical problems described in the Background. Therefore, an objective of the present application is to provide a battery cell, a battery, and an electric device to improve the reliability of the battery cell.

An embodiment in the first aspect of the present application provides a battery cell, including a positive electrode sheet, a negative electrode sheet, and a separator, where the positive electrode sheet includes a positive electrode active material area; the negative electrode sheet includes a negative electrode active material area; the negative electrode sheet and the positive electrode sheet are stacked along a first direction; the separator is located between any adjacent positive electrode sheet and negative electrode sheet; and a projection of the negative electrode sheet on a first plane perpendicular to the first direction completely falls within the range of a projection of the positive electrode sheet on the first plane, and a projection of the positive electrode active material area on the first plane falls within the range of a projection of the negative electrode active material area on the first plane.

In the technical solution of the embodiment of the present application, when the negative electrode sheet and the positive electrode sheet are stacked along the first direction, the projection of the positive electrode active material area on the first plane is set to fall within the range of the projection of the negative electrode active material area on the first plane, thereby reducing the possibility of dendrite formation, and the projection of the negative electrode sheet on the first plane perpendicular to the first direction completely falls within the range of the projection of the positive electrode sheet on the first plane, so that the portion of the negative electrode active material area of the negative electrode sheet beyond the positive electrode active material area can also be supported, which reduces the probability of the negative electrode sheet being sheared and broken, thereby improving the reliability of the battery cell.

In some embodiments, the negative electrode sheet further includes a negative electrode empty foil area surrounding the negative electrode active material area, and a projection of the negative electrode empty foil area on the first plane completely falls within the range of a projection of the insulating area on the first plane. Since the positive electrode sheet includes the insulating area surrounding the periphery of the positive electrode active material area, the negative electrode sheet includes the negative electrode empty foil area surrounding the negative electrode active material area, and the projection of the negative electrode empty foil area on the first plane completely falls within the range of the projection of the insulating area on the first plane, that is, the edge of the negative electrode active material area corresponds to the insulating area of the positive electrode sheet, there is no ion transmission between the edge of the negative electrode active material area and the insulating area of the positive electrode sheet, so that the probability of forming dendrites at the edge of the negative electrode active material area of the negative electrode sheet is reduced, thereby further improving the reliability of the battery cell.

In some embodiments, the insulating area is adjacent to the positive electrode active material area. By disposing the insulating area adjacent to the positive electrode active material area, there is no empty foil area between the insulating area and the positive electrode active material area, that is, there is no lithium ion transmission between the insulating area and the positive electrode active material area, which further reduces the probability of forming dendrites at the edge of the negative electrode active material area of the negative electrode sheet, thereby further improving the reliability of the battery cell.

In some embodiments, the insulating area includes a first region and a second region that are connected, an insulating material in the first region is adjacent to an active material in the positive electrode active material area, and an insulating material in the second region covers a surface of the active material of the positive electrode active material area. By enabling the insulating area to include the first region and the second region that are connected, the insulating material of the first region is adjacent to the active material of the positive electrode active material area, and the insulating material of the second region covers the surface of the active material of the positive electrode active material area, so that the probability that there is the empty foil area existing between the insulating area and the positive electrode active material area may be further reduced, thereby further reducing the possibility of forming dendrites at the edge of the negative electrode active material area of the negative electrode sheet, and further improving the reliability of the battery cell.

In some embodiments, a width W of the second region satisfies 0<W≤10mm. By setting the width W of the second region to satisfy 0<W≤10mm, the performance of the positive electrode sheet may be considered while satisfying the condition of no empty foil area of the positive electrode sheet.

In some embodiments, a width W of the second region satisfies 0<W≤1mm. By setting the width W of the second region to satisfy 0<W≤1mm, the performance of the positive electrode sheet may be further improved.

In some embodiments, a thickness D1 of the first insulating material of the first region satisfies 10µm≤D1≤250µm. By controlling the thickness D1 of the insulating material of the first region to satisfy 10µm≤D1≤250µm, the thickness of the positive electrode sheet may be controlled, and the insulation effect and the gap between the electrode sheets are considered, thereby improving the performance of the battery cell and prolonging the service life of the battery cell.

In some embodiments, the thickness D1 of the first insulating material of the first region satisfies 20µm≤D1≤70µm. By setting the thickness D1 of the insulating material of the first region to be between 20µm and 70µm, the thickness of the positive electrode sheet is more appropriate, so that the performance of the battery cell may be further improved.

In some embodiments, the thickness D2 of the second insulating material of the second region satisfies 0<D2≤30µm. By setting the thickness D2 of the insulating material of the second region to satisfy 0<D2≤30µm, the flatness of the positive electrode sheet may be improved.

In some embodiments, the thickness D2 of the second insulating material of the second region satisfies 0<D2≤5µm. By setting the thickness D2 of the insulating material of the second region to satisfy 0<D2≤5µm, the flatness of the positive electrode sheet may be further improved.

In some embodiments, along a width direction of the battery cell, a shortest distance between an edge of the negative electrode sheet and an edge of the positive electrode active material area on a same side is L1, a longest distance between the edge of the negative electrode sheet and the edge of the positive electrode sheet is L2, and L1 is greater than L2; and/or along a length direction of the battery cell, a shortest distance between an edge of the negative electrode sheet and an edge of the positive electrode active material area on a same side is L3, a longest distance between the edge of the negative electrode sheet and an edge of the positive electrode sheet is L4, and L3 is greater than L4. In a second aspect, an embodiment of the present application provides a battery including the battery cell provided in the above embodiments. Along the width direction of the battery cell, the shortest distance between the edge of the negative electrode sheet and the edge of the positive electrode active material area on the same side is L1, the longest distance between the edge of the negative electrode sheet and the edge of the positive electrode sheet is L2, and L1 is greater than L2; and/or along the length direction of the battery cell, the shortest distance between the edge of the negative electrode sheet and the edge of the positive electrode active material area on the same side is L3, the longest distance between the edge of the negative electrode sheet and an edge of the positive electrode sheet is L4, and L3 is greater than L4, so that the probability of the positive electrode sheet or the negative electrode sheet being misaligned when the negative electrode sheet and the positive electrode sheet are stacked in the first direction may be reduced, thereby reducing the probability of the edge of the negative electrode sheet directly overlapping the active material area of the positive electrode sheet to cause a micro short circuit or dendrite growth inside the battery cell, and further improving the reliability of the battery cell.

In some embodiments, along the first direction, the separator is bent and extended to form a plurality of planar portions and a plurality of bending portions, the planar portions are located between the positive electrode sheet and the negative electrode sheet that are adjacent, and the bending portions are located between two adjacent planar portions. Along the first direction, the separator is bent and extended to form a plurality of planar portions and a plurality of bending portions, the planar portions are located between the positive electrode sheet and the negative electrode sheet that are adjacent, and the bending portions are located between two adjacent planar portions. The positive electrode sheet and the negative electrode sheet may expand in a direction away from the bending portions when expanding, thereby reducing the probability that the positive electrode sheet and the negative electrode sheet contact the separator to cause the positive electrode sheet and the negative electrode sheet to bend, and reducing the probability that the positive electrode sheet and the negative electrode sheet cause the separator to tear, thereby improving the reliability of the battery cell.

In a second aspect, an embodiment of the present application provides a battery including the battery cell provided in the above embodiments.

In a third aspect, an embodiment of the present application provides an electric device including the battery provided in the above embodiment, wherein the battery is used to supply electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application. In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.
FIG. 1 is a schematic diagram of a structure of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application; and
FIG. 4 is a schematic structural diagram of a battery cell according to in some embodiments of the present application;
FIG. 5 is a top view of FIG. 4;
FIG. 6 is a schematic structural diagram I of a positive electrode sheet according to some embodiments of the present application;
FIG. 7 is a schematic structural diagram of a negative electrode sheet according to some embodiments of the present application;
FIG. 8 is a schematic structural diagram II of a positive electrode sheet according to some embodiments of the present application; and
FIG. 9 is a schematic structural diagram III of a positive electrode sheet according to some embodiments of the present application.

Description of reference signs:
1000-vehicle;
100-battery; 200-controller; 300-motor;
10-box; 11-first part; 12-second part;
20-battery cell; 21-end cap; 211-electrode terminal; 22-case; 23-battery cell assembly; 24-tab;
25-positive electrode sheet; 26-negative electrode sheet; 27-separator; 251-positive electrode active material area; 252-insulating area; 261-negative electrode active material area; 262-negative electrode empty foil area; 2521-first region; 2522-second region; 28-first plane; 271-planar portion; 272-bending portion.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

In the related art, the separator of the battery cell exceeds the negative electrode sheet in both the width direction and the length direction of the separator, so that the negative electrode sheet and the positive electrode sheet are insulated from each other. The negative electrode sheet exceeds the positive electrode sheet in both the width direction and length direction of the negative electrode sheet, which may reduce, to a certain extent, the situation that lithium ions deintercalated from the active material of the positive electrode sheet are too much to be completely inserted into the active material of the negative electrode sheet during charging, thereby causing lithium precipitation on the surface of the negative electrode sheet and bringing safety risks.

With the intercalation or deintercalation of the ions by the positive electrode active material and the negative electrode active material during the charge and discharge cycle of the battery, the battery cell may swell, that is, the positive electrode sheet and the negative electrode sheet expand in the thickness direction, and the expansion force generated in this way may shear the portion of the negative electrode sheet beyond the positive electrode sheet, causing the negative electrode sheet to be sheared and broken, resulting in reliability problems such as short circuit, thermal failure or even explosion inside the battery cell.

Based on the above considerations, in order to solve the problem of the influence of electrode sheet expansion on the reliability of the battery cell, the present application provides a battery cell, where the battery cell includes a positive electrode sheet, a negative electrode sheet, and a separator. When the negative electrode sheet and the positive electrode sheet are stacked along the first direction, the projection of the positive electrode active material area on the first plane is set to fall within the range of the projection of the negative electrode active material area on the first plane, thereby reducing the possibility of dendrite formation, and the projection of the negative electrode sheet on the first plane perpendicular to the first direction completely falls within the range of the projection of the positive electrode sheet on the first plane, so that the portion of the negative electrode active material area of the negative electrode sheet beyond the positive electrode active material area can also be supported, which reduces the probability of the negative electrode sheet being sheared and broken, thereby improving the reliability of the battery cell.

The battery cell disclosed in the embodiments of the present application may be, but not limited to, used in an electric device such as a vehicle, a ship, or an aircraft. A power supply system of the electric device with the battery cell, the battery, and the like disclosed in the present application may be used. In this way, it is beneficial to improve the reliability of the battery cell.

Provided in the embodiments of this application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

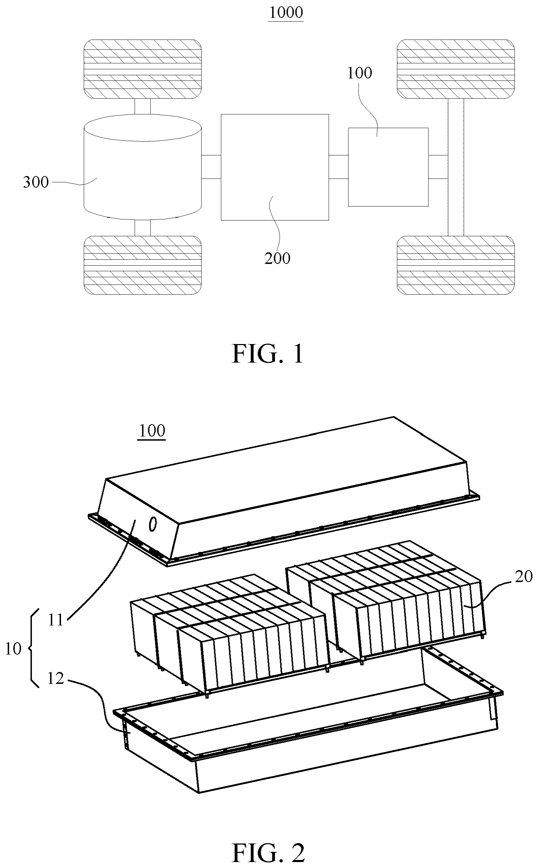

Refer to FIG. 1. FIG. 1 is a schematic structural diagram of a vehicle according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000. The vehicle 1000 may further include a controller 200 and a motor 300, where the controller 200 is used to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG. 2 is a schematic diagram of a decomposed structure of a battery according to some embodiments of the present application. The battery 100 includes a box 10 and a battery cell 20. The battery cell 20 is accommodated in the box 10. Here, the box 10 is used for providing an accommodation space for the battery cell 20, and the box 10 may have various structures. In some embodiments, the box 10 may include a first part 11 and a second part 12, where the first part 11 and the second part 12 fit to each other to define an accommodation space for accommodating the battery cell 20. The second part 12 may be a hollow structure with an opening at one end, the first part 11 may be a plate-shaped structure, and the first part 11 covers an opening side of the second part 12, so that the first part 11 and the second part 12 jointly define the accommodation space. The first part 11 and the second part 12 each may be a hollow structure with an opening at one end, and an opening side of the first part 11 covers an opening side of the second part 12. Certainly, the box 10 formed by the first part 11 and the second part 12 may be in various shapes such as a cylinder, a cuboid, and the like.

In the battery 100, a plurality of battery cells 20 may be disposed, and the plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 100 may further include other structures. For example, the battery 100 may further include a busbar component for implementing an electrical connection between the plurality of battery cells 20.

Here, each battery cell 20 may be a secondary battery or a primary battery, or may be a lithium-sulfur battery, a sodium-ion battery, or a magnesium-ion battery, but is not limited thereto. The battery cell 20 may be in the shape of a cylinder, a flat body, a cuboid, or the like.

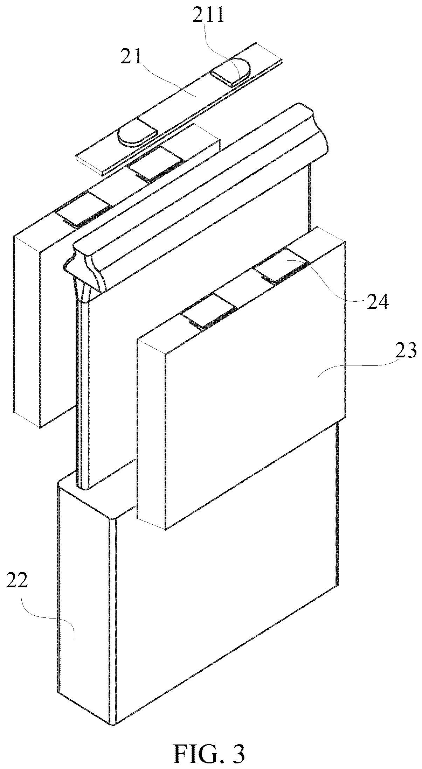

Referring to FIG. 3, FIG. 3 is a schematic diagram of a decomposed structure of a battery cell according to some embodiments of the present application. The battery cell 20 refers to a minimum unit constituting a battery. As shown in FIG. 3, the battery cell 20 includes an end cap 21, a case 22, a battery cell assembly 23, and other functional components.

The end cap 21 is a component that covers the opening of the case 22 to insulate an internal environment of the battery cell 20 from an external environment. Without limitation, the shape of the end cap 21 may adapt to the shape of the case 22 to fit the case 22. In some embodiments, the end cap 21 may be made of a material with certain hardness and strength (e.g., an aluminum alloy). As such, the end cap 21 is less prone to deformation under compressive impact, thereby enabling the battery cell 20 to have higher structural strength and improved safety performance. The end cap 21 may be provided with a functional component such as an electrode terminal 211. The electrode terminal 211 may be configured to be electrically connected to the battery cell assembly 23 for outputting or inputting electrical energy of the battery cell 20. In some embodiments, a pressure relief mechanism for relieving the internal pressure may be further disposed on the end cap 21 when the internal pressure or temperature of the battery cell 20 reaches a threshold. The end cap 21 may be made of various materials, for example, copper, iron, aluminum, stainless steel, an aluminum alloy, a plastic, and the like. In some embodiments, an insulation piece may be further provided on an inner side of the end cap 21, and the insulation member may be used to isolate an electrical connection component in the case 22 from the end cap 21 to reduce the risk of a short circuit. For example, the insulation member may be plastic, rubber, etc.

The case 22 is a component configured to cooperate with the end cap 21 to form an internal environment of the battery cell 20, where the formed internal environment may be used to accommodate the battery cell assembly 23, an electrolyte solution, and other components. The case 22 and the end cap 21 may be separate members, and an opening may be provided in the case 22, and the inner environment of the battery cell 20 may be formed by closing the end cap 21 at the opening. Without limitation, the end cap 21 and the case 22 may also be integrated. Specifically, the end cap 21 and the case 22 may form a joint connection surface before other components are fitted into the case, and then the end cap 21 is enabled to cover the case 22 when an interior of the case 22 needs to be enclosed. The case 22 may be in various shapes and various dimensions, such as a cuboid, a cylinder, a hexagonal prism, and the like. Specifically, the shape of the case 22 may be determined based on a specific shape and dimension of the battery cell assembly 23. The case 22 may be made of various materials, for example, copper, iron, aluminum, stainless steel, an aluminum alloy, a plastic, and the like.

The battery cell assembly 23 is a component in the battery cell 20 in which an electrochemical reaction occurs. The case 22 may include one or more battery cell assemblies 23. The battery cell assembly 23 is mainly formed by winding or stacking a positive electrode sheet 25 and a negative electrode sheet 26, and a separator 27 is generally disposed between the positive electrode sheet 25 and the negative electrode sheet 26. Parts of the positive electrode sheet 25 and the negative electrode sheet 26 with an active material constitute a main body portion of the battery cell assembly, and parts of the positive electrode sheet 25 and the negative electrode sheet 26 with no active material each constitute a tab 24. The positive electrode tab and negative electrode tab may both be located at one end of the main body portion or be located at two ends of the main body portion respectively. During charge-discharge of a battery, a positive electrode active material and a negative electrode active material react with an electrolyte solution, and the tab 24 is connected to an electrode terminal to form a current circuit.

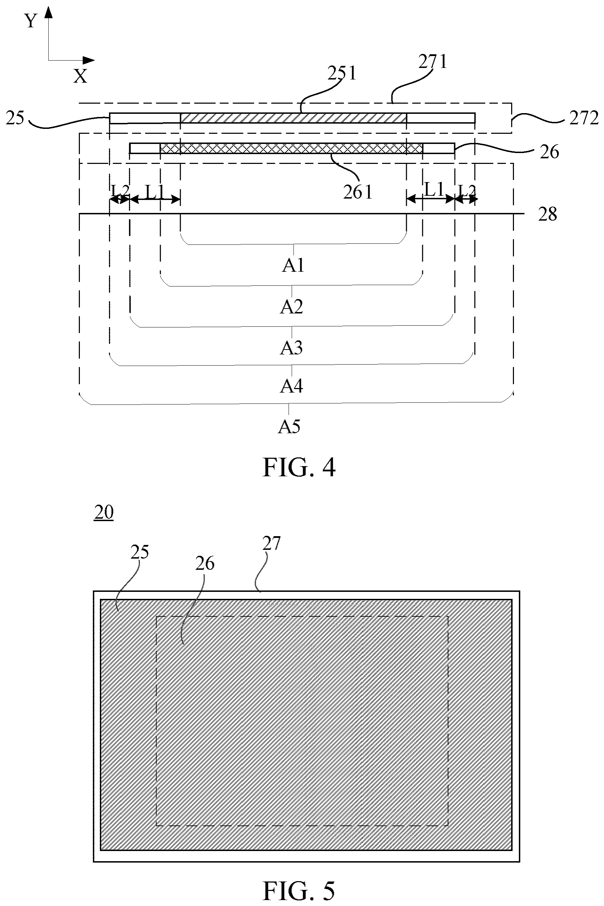

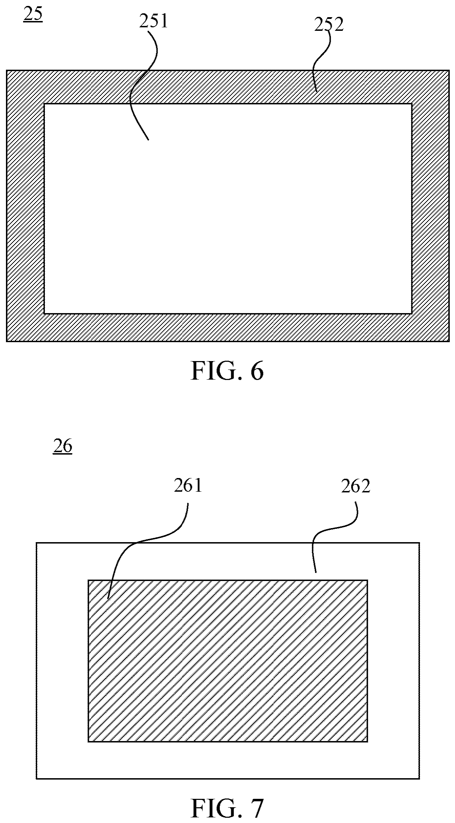

According to some embodiment of the present application, referring to FIG. 4 to FIG. 7, FIG. 4 is a schematic structural diagram of a battery cell 20 according to some embodiments of the present application, FIG. 5 is a top view of FIG. 4, FIG. 6 is a schematic structural diagram I of a positive electrode sheet 25 according to some embodiments of the present application, and FIG. 7 is a schematic structural diagram of a negative electrode sheet 26 according to some embodiments of the present application. The present application provides a battery cell 20. The battery cell 20 includes a positive electrode sheet 25, a negative electrode sheet 26, and a separator 27, where the positive electrode sheet 25 includes a positive electrode active material area 251; the negative electrode sheet 26 includes a negative electrode active material area 261; the negative electrode sheet 26 and the positive electrode sheet 25 are stacked along a first direction Y; the separator 27 is located between any adjacent positive electrode sheet 25 and negative electrode sheet 26; and a projection A3 of the negative electrode sheet 26 on a first plane 28 perpendicular to the first direction Y completely falls within the range of a projection A4 of the positive electrode sheet 25 on the first plane 28, and a projection A1 of the positive electrode active material area 251 on the first plane 28 falls within the range of a projection A2 of the negative electrode active material area 261 on the first plane 28.

In the embodiments of the present application, the battery cell 20 may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application.

In the embodiments of the present application, the battery cell 20 may be of a stacked structure. The battery cell 20 may include a plurality of positive electrode sheets 25, a plurality of negative electrode sheets 26, and a separator 27. The plurality of positive electrode sheets 25 and the plurality of negative electrode sheets 26 may be alternately stacked along the first direction Y of the battery cell 20, the separator 27 may be continuous, the battery cell 20 may include one separator 27, and the separator 27 is located between any adjacent positive electrode sheet 25 and negative electrode sheet 26. In some embodiments, the separator 27 may be discontinuous, the battery cell 20 includes a plurality of separators 27, and each separator 27 is located between the adjacent positive electrode sheet 25 and negative electrode sheet 26.

In the embodiments of the present application, the projection A4 of the positive electrode sheet 25 on the first plane 28 perpendicular to the first direction Y may completely fall within the range of the projection A5 of the separator 27 on the first plane 28.

In the embodiments of the present application, the region coated with the active material on the positive electrode sheet 25 is the positive electrode active material area 251, the positive electrode sheet 25 may include a positive current collector and positive active material layers disposed on both sides of the positive current collector, and the positive current collector may be a metal foil or a composite current collector.

In the embodiments of the present application, the region coated with the active material on the negative electrode sheet 26 is the negative electrode active material area 261, the negative electrode sheet 26 may include a negative current collector and negative active material layers disposed on both sides of the negative current collector, and the negative current collector may be a metal foil or a composite current collector.

In the embodiments of the present application, during charge-discharge of the battery cell 20, the positive active material in the positive electrode active material area 251 and the negative active material in the negative electrode active material area 261 react with the electrolyte solution. Exemplarily, the battery cell 20 is a lithium battery cell, lithium ions move to the negative electrode sheet 26 under the action of the electrolyte solution when the lithium battery cell is charged, and when the lithium battery cell is discharged, the negative electrode carbon layer is embedded with lithium ions and then falls off and returns to the positive electrode sheet 25. During design of the battery cell 20, if the negative electrode sheet 26 does not have a position for receiving lithium ions, the lithium ions will precipitate on the surface of the negative electrode sheet 26 to form lithium dendrites, which pierce the separator 27 to cause a short circuit in the battery cell 20 and cause thermal runaway control. Therefore, when the battery cell 20 is designed, the negative electrode sheet 26 often needs to be overdesigned to reduce such situations. Specifically, the length and width of the negative electrode active material area 261 are greater than the length and width of the positive electrode active material area 251, and during stacking, the negative electrode active material area 261 completely covers the positive electrode active material area 251, that is, the projection A1 of the positive electrode active material area 251 on the first plane 28 is required to completely fall within the range of the projection A2 of the negative electrode active material area 261 on the first plane 28.

With charge-discharge cycles of the battery cell 20, intercalation and deintercalation of the ions in the positive electrode active material and the negative electrode active material will cause expansion and contraction of the battery cell 20. In an ideal state, the volume changes of the positive electrode sheet 25 and the negative electrode sheet 26 during the intercalation or deintercalation of ions in the positive electrode active material area 251 and the negative electrode active material area 261 should be reversible. However, in actual situations, some ions cannot be completely deintercalated from the negative electrode sheet 26 due to the change of the balance of the battery cell 20, or are deposited on the surface of the negative electrode sheet 26 as insoluble by-products in the cycle process, which will cause the battery cell 20 to swell, so that the positive electrode sheet 25 may shear the negative electrode sheet 26, resulting in the negative electrode sheet 26 being sheared and broken. In order to reduce the possibility of the negative electrode sheet 26 being sheared and broken, the size of the positive electrode sheet 25 is required to be greater than the size of the negative electrode sheet 26, and the positive electrode sheet 25 is required to completely cover the negative electrode sheet 26 after stacking, that is, the projection A3 of the negative electrode sheet 26 on the first plane 28 perpendicular to the first direction Y is required to completely fall within the range of the projection A4 of the positive electrode sheet 25 on the first plane 28.

In the embodiments of the present application, when the negative electrode sheet 26 and the positive electrode sheet 25 are stacked along the first direction Y, the projection A1 of the positive electrode active material area 251 on the first plane 28 is set to fall within the range of the projection A2 of the negative electrode active material area 261 on the first plane 28, thereby reducing the possibility of dendrite formation, and the projection A3 of the negative electrode sheet 26 on the first plane 28 perpendicular to the first direction Y completely falls within the range of the projection A4 of the positive electrode sheet 25 on the first plane 28, so that the portion of the negative electrode active material area 261 of the negative electrode sheet 26 beyond the positive electrode active material area 251 can also be supported, which reduces the probability of the negative electrode sheet 26 being sheared and broken, thereby improving the reliability of the battery cell 20.

According to some embodiments of the present application, referring to FIG. 6, the positive electrode sheet 25 further includes an insulating area 252 surrounding the periphery of the positive electrode active material area 251, and referring to FIG. 7, the negative electrode sheet 26 further includes a negative electrode empty foil area surrounding the negative electrode active material area 261, and a projection of the negative electrode empty foil area on the first plane 28 completely falls within a range of a projection of the insulating area 252 on the first plane 28.

In the embodiments of the present application, the positive electrode sheet 25 may include a positive electrode foil and positive electrode active material layers disposed on both sides of the positive electrode current collector, and the positive electrode foil may be a metal foil. For example, as the metal foil, aluminum or stainless steel which is subjected to surface treatment by silver, stainless steel, copper, aluminum, nickel, carbon electrode, carbon, nickel, titanium, or the like can be employed. The positive active material may include at least one of a lithium-containing phosphate, a lithium-transition metal oxide, and respective modified compounds thereof. However, the present application is not limited to these materials, and other conventional materials that can be used as a positive pole active material of a battery may also be used. These positive pole active materials may be used alone or in combination of two or more thereof.

In the embodiments of the present application, the insulating area 252 refers to a portion of the positive electrode foil coated with an insulating material, and the insulating material has an effect of insulating electrons and ions. The insulating material may be an inorganic insulating ceramic component such as boehmite, or an organic high-molecular insulating polymer component such as polyimide.

In the embodiments of the present application, the negative electrode sheet 26 may include a negative electrode current collector and negative electrode active material layers disposed on both sides of the negative electrode current collector, and the negative electrode current collector may be a metal foil. For example, as the metal foil, the negative electrode collector may be aluminum or stainless steel surface-treated with silver, stainless steel, copper, aluminum, nickel, a carbon electrode, carbon, nickel or titanium, and the like. The negative electrode active material may be a negative electrode active material for a battery well-known in the art. As an example, the negative pole active material may include at least one of the following materials: synthetic graphite, natural graphite, soft carbon, hard carbon, a silicon-based material, a tin-based material, lithium titanate, and the like.

In the embodiments of the present application, the positive electrode sheet 25 further includes an insulating area 252 surrounding the periphery of the positive electrode active material area 251, which means that the insulating area 252 is disposed along the periphery of the positive electrode active material area 251, the positive electrode active material area 251 is located in the central region of the positive electrode sheet 25, and the insulating area 252 is located surrounding the periphery of the positive electrode active material area 251. Similarly, the negative electrode sheet 26 further includes a negative electrode empty foil area 262 surrounding the negative electrode active material area 261, which refers to a region where the negative electrode empty foil area is located along the periphery of the negative electrode active material area 261, the negative electrode active material area 261 is located in the central region of the negative electrode sheet 26, and the negative electrode empty foil area 262 is located surrounding the periphery of the negative electrode active material. It may be understood that the negative electrode empty foil area 262 may be a region of the negative electrode current collector of the negative electrode sheet 26 that is not coated with the negative electrode active material.

Since the positive active material of the positive electrode active material area 251 and the negative active material of the negative active material area 261 react with the electrolyte solution during the charge-discharge of the battery cell 20, when the negative electrode sheet 26 and the positive electrode sheet 25 are stacked along the first direction Y, it is necessary to consider the positional relationship between the positive electrode active material area 251 and the negative electrode active material area 261, and the projection A1 of the positive electrode active material area 251 on the first plane 28 is required to fall within the range of the projection A2 of the negative electrode active material area 261 on the first plane 28. Meanwhile, the projection A3 of the negative electrode sheet 26 on the first plane 28 perpendicular to the first direction Y completely falls within the range of the projection A4 of the positive electrode sheet 25 on the first plane 28, and the projection of the negative electrode empty foil area on the first plane 28 completely falls within the range of the projection of the insulating area 252 on the first plane 28, that is, the edge of the negative electrode active material area 261 corresponds to the insulating area 252 of the positive electrode sheet 25, so that there is no ion transmission at the edge of the negative electrode active material area 261.

In the embodiments of the present application, the positive electrode sheet 25 includes the insulating area 252 surrounding the periphery of the positive electrode active material area 251, the negative electrode sheet 26 includes the negative electrode empty foil area 262 surrounding the negative electrode active material area 261, and the projection of the negative electrode empty foil area 262 on the first plane 28 completely falls within the range of the projection of the insulating area 252 on the first plane 28, that is, the edge of the negative electrode active material area 261 corresponds to the insulating area 252 of the positive electrode sheet 25, and there is no ion transmission between the edge of the negative electrode active material area 261 and the insulating area 252 of the positive electrode sheet 25, so that the probability of forming dendrites at the edge of the negative electrode active material area 261 of the negative electrode sheet 26 is reduced, thereby further improving the reliability of the battery cell 20.

According to some embodiments of the present application, the insulating area 252 is adjacent to the positive electrode active material area 251.

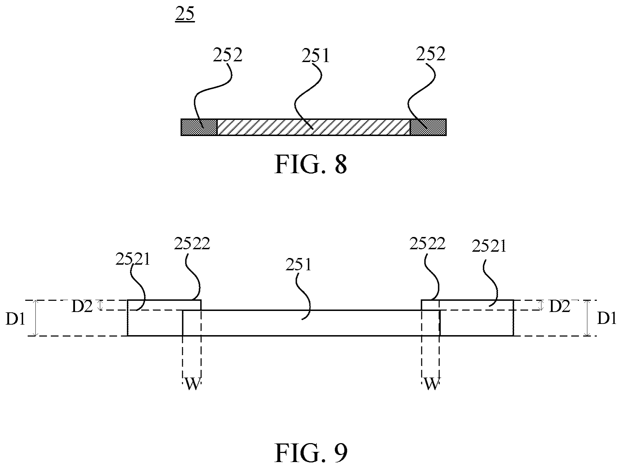

In the embodiments of the present application, referring to FIG. 8, FIG. 8 is a schematic structural diagram II of a positive electrode sheet 25 according to some embodiments of the present application. The insulating area 252 being adjacent to the positive electrode active material area 251 means that an edge of the insulating area 252 abuts against an edge of the positive electrode active material area 251, that is, there is no empty foil area between the insulating area 252 and the positive electrode active material area 251. There is no empty foil area between the insulating area 252 and the positive electrode active material area 251, and there is no ion transmission between the insulating area 252 and the positive electrode active material area 251 during charge-discharge of the battery cell 20.

In the embodiments of the present application, by disposing the insulating area 252 adjacent to the positive electrode active material area 251, there is no empty foil area between the insulating area 252 and the positive electrode active material area 251, that is, there is no lithium ion transmission between the insulating area 252 and the positive electrode active material area 251, which further reduces the probability of forming dendrites at the edge of the negative electrode active material area 261 of the negative electrode sheet 26, thereby further improving the reliability of the battery cell. 20

According to some embodiments of the present application, referring to FIG. 9, FIG. 9 is a schematic structural diagram III of a positive electrode sheet 25 according to some embodiments of the present application. The insulating area 252 includes a first region 2521 and a second region 2522 connected to each other, the insulating material of the first region 2521 is adjacent to the active material of the positive electrode active material area 251, and the insulating material of the second region 2522 covers the surface of the active material of the positive electrode active material area 251.

In the embodiments of the present application, the insulating material of the first region 2521 abutting against the active material of the positive electrode active material area 251 means that the edge of the first region 2521 abuts against the edge of the positive electrode active material area 251, that is, there is no empty foil area between the first region 2521 and the positive electrode active material area 251.

In the embodiments of the present application, the insulating material of the second region 2522 has an electrical insulation function. The insulating material of the second region 2522 covering the surface of the active material of the positive electrode active material area 251 means that the insulating material of the second region 2522 is located on the surface of a side, away from the current collector, of the positive electrode active material area 251. The second region 2522 may be prepared by coating or spraying the insulating material on the surface of the positive electrode active material area 251, and the second region 2522 may be prepared in the same process as the first region 2521, or may be prepared separately and independently.

In the embodiments of the present application, by enabling the insulating area 252 to include the first region 2521 and the second region 2522 that are connected, the insulating material of the first region 2521 is adjacent to the active material of the positive electrode active material area 251, and the insulating material of the second region 2522 covers the surface of the active material of the positive electrode active material area 251, so that the probability that there is the empty foil area existing between the insulating area 252 and the positive electrode active material area 251 may be further reduced, thereby further reducing the possibility of forming dendrites at the edge of the negative electrode active material area 261 of the negative electrode sheet 26, and further improving the reliability of the battery cell 20.

According to some embodiments of the present application, a width W of the second region 2522 satisfies 0<W≤10 millimeters (mm).

In the embodiments of the present application, the width of the second region 2522 is the width of the insulating material covering the surface of the active material of the positive active material area 251. Therefore, when the processing technology is formulated, in addition to the width requirement of the insulating material covering the surface of the active material of the positive electrode active material area 251, the area of the active material area should also be considered. Therefore, the width W of the second region 2522 should not be too large, otherwise, the positive electrode active material area 251 will cause the area of the positive electrode active material area 251 of the positive electrode sheet 25 to be too small due to the too large width of the insulating material covering the surface, which further affects the performance of the battery cell 20. In some embodiments, the width W of the second region 2522 may be 1 mm, 2 mm, 3 mm, 4 mm, 5 mm, 6 mm, 7 mm, 8 mm, 9 mm or 10 mm, or the like.

In the embodiments of the present application, the width W of the second region 2522 is set to satisfy 0<W≤10mm, so that the performance of the positive electrode sheet 25 may be considered on a basis that the positive electrode sheet 25 has no empty foil area.

According to some embodiments of the present application, the width W of the second region 2522 satisfies 0<W≤1mm.

In some embodiments, the width W of the second region 2522 may be 0.1 mm, 0.2 mm, 0.3 mm, 0.4 mm, 0.5 mm, 0.6 mm, 0.7 mm, 0.8 mm, 0.9 mm or 1 mm, or the like.

In the embodiments of the present application, by setting the width W of the second region 2522 to satisfy 0<W≤1mm, the performance of the positive electrode sheet 25 may be further improved.

According to some embodiments of the present application, the thickness D1 of the insulating material of the first region 2521 satisfies 10 micrometers (µm)≤D1≤ 250µm.

In the embodiments of the present application, generally, the thickness of the positive electrode sheet 25 generally refers to the thickness of the positive active material, the thickness of the positive active material directly affects the capacity and energy density of the battery cell 20, and the thicker the thickness of the positive active material, the larger the capacity and energy density of the battery cell 20. Generally, the thickness of the positive electrode sheet 25 is between 10µm and 250µm. Since the insulating material of the first region 2521 is adjacent to the active material of the positive electrode active material area 251, in order to make the positive electrode sheet 25 more flat, the thickness D1 of the insulating material of the first region 2521 may be the same as the thickness of the positive active material, and the thickness D1 of the insulating material of the first region 2521 satisfies 10µm≤D1≤250µm. In some embodiments, the thickness D1 of the insulating material of the first region 2521 may be 100µm, 150µm, 200µm, or 250µm, or the like.

In the embodiments of the present application, by controlling the thickness D1 of the insulating material of the first region 2521 to satisfy 10µm≤D1≤250µm, the thickness of the positive electrode sheet 25 may be controlled, and the insulation effect and the gap between the electrode sheets are considered, thereby improving the performance of the battery cell 20 and prolonging the service life of the battery cell 20.

According to some embodiments of the present application, the thickness D1 of the insulating material of the first region 2521 satisfies 20µm≤D1≤70µm.

In some embodiments, the thickness D1 of the insulating material of the first region 2521 may be 20µm, 30µm, 40µm, 50µm, 60µm, or 70µm, or the like.

In the embodiments of the present application, by setting the thickness D1 of the insulating material of the first region 2521 to be between 20µm and 70µm, the thickness of the positive electrode sheet 25 is more appropriate, so that the performance of the battery cell 20 may be further improved.

According to some embodiments of the present application, the thickness D2 of the insulating material of the second region 2522 satisfies 0<D2≤30µm.

In the embodiments of the present application, the insulating material of the second region 2522 covers the surface of the active material of the positive electrode active material area 251, and the thickness D2 of the insulating material of the second region 2522 is too large, which may make the thickness of the positive electrode sheet 25 of the second region 2522 too large, and the flatness of the positive electrode sheet 25 may be poor. Therefore, in order to improve the flatness of the positive electrode sheet 25, the thickness D2 of the insulating material of the second region 2522 is required to be within an appropriate range. Exemplarily, the thickness D2 of the insulating material of the second region 2522 may be 5µm, 10µm, 15µm, 20µm, 25µm, or 30µm, or the like

In the embodiments of the present application, by setting the thickness D2 of the insulating material of the second region 2522 to satisfy 0<D2≤30µm, the flatness of the positive electrode sheet 25 may be improved.

According to some embodiments of the present application, the thickness D2 of the insulating material of the second region 2522 satisfies 0<D2≤5µm.

Exemplarily, the thickness D2 of the insulating material in the second region 2522 may be 1µm, 2 µm, 3µm, 4µm, or 5µm, or the like.

In the embodiments of the present application, by setting the thickness D2 of the insulating material of the second region 2522 to satisfy 0<D2≤5µm, the flatness of the positive electrode sheet 25 may be further improved.

According to some embodiments of the present application, along a width direction X of the battery cell 20, a shortest distance between an edge of the negative electrode sheet 26 and an edge of the positive electrode active material area 251 on a same side is L1, a longest distance between the edge of the negative electrode sheet 26 and the edge of the positive electrode sheet 25 is L2, and L1 is greater than L2; and/or along a length direction of the battery cell 20, a shortest distance between an edge of the negative electrode sheet 26 and an edge of the positive electrode active material area 251 on a same side is L3, a longest distance between the edge of the negative electrode sheet 26 and an edge of the positive electrode sheet 25 is L4, and L3 is greater than L4.

In the embodiments of the present application, referring to FIG. 4, along the width direction X of the battery cell 20, the shortest distance between the edge of the negative electrode sheet 26 and the edge of the positive electrode active material area 251 on the same side is L1, and the longest distance between the edge of the negative electrode sheet 26 and the edge of the positive electrode sheet 25 is L2. When the negative electrode sheet 26 and the positive electrode sheet 25 are stacked along the first direction Y, when L1 is less than L2, the negative electrode sheet 26 or the positive electrode sheet 25 may be misaligned, the projection of the negative electrode sheet 26 on the first plane 28 perpendicular to the first direction Y may not completely fall within the range of the projection of the positive electrode sheet 25 on the first plane 28, and the projection of the positive electrode active material area 251 on the first plane 28 may not fall within the range of the projection of the negative electrode active material area 261 on the first plane 28. When L1 is greater than L2, the projection of the negative electrode sheet 26 on the first plane 28 perpendicular to the first direction Y along the width direction X of the battery cell 20 may completely fall within the range of the projection of the positive electrode sheet 25 on the first plane 28, and the projection of the positive electrode active material area 251 on the first plane 28 may fall within the range of the projection of the negative electrode active material area 261 on the first plane 28.

Similarly, when L3 is greater than L4, along the length direction of the battery cell 20, the projection of the negative electrode sheet 26 on the first plane 28 perpendicular to the first direction Y may completely fall within the range of the projection of the positive electrode sheet 25 on the first plane 28, and the projection of the positive electrode active material area 251 on the first plane 28 falls within the range of the projection of the negative electrode active material area 261 on the first plane 28.

In the embodiments of the present application, along the width direction X of the battery cell 20, the shortest distance between the edge of the negative electrode sheet 26 and the edge of the positive electrode active material area 251 on the same side is L1, the longest distance between the edge of the negative electrode sheet 26 and the edge of the positive electrode sheet 25 is L2, and L1 is greater than L2; and/or along the length direction of the battery cell 20, the shortest distance between the edge of the negative electrode sheet 26 and the edge of the positive electrode active material area 251 on the same side is L3, the longest distance between the edge of the negative electrode sheet 26 and an edge of the positive electrode sheet 25 is L4, and L3 is greater than L4, so that the probability of the positive electrode sheet 25 or the negative electrode sheet 26 being misaligned when the negative electrode sheet 26 and the positive electrode sheet 25 are stacked in the first direction Y may be reduced, thereby reducing the probability of the edge of the negative electrode sheet 26 directly overlapping the active material area of the positive electrode sheet 25 to cause a micro short circuit or dendrite growth inside the battery cell 20, and further improving the reliability of the battery cell 20.

According to some embodiments of the present application, along the first direction Y, the separator 27 is bent and extended to form a plurality of planar portions 271 and a plurality of bending portions 272, the planar portions 271 are located between the positive electrode sheet 25 and the negative electrode sheet 26 that are adjacent, and the bending portions 272 are located between two adjacent planar portions 271.

In the embodiments of the present application, exemplarily, the battery cell 20 is a "Z"-shaped lamination. The positive electrode sheet 25 and the negative electrode sheet 26 are located in a space formed by the two planar portions 271 and the bending portions 272.

In the embodiments of the present application, along the first direction Y, the separator 27 is bent and extended to form the plurality of planar portions 271 and the plurality of bending portions 272, the planar portions 271 are located between the positive electrode sheet 25 and the negative electrode sheet 26 that are adjacent, and the bending portions 272 are located between two adjacent planar portions 271. The positive electrode sheet 25 and the negative electrode sheet 26 may expand in a direction away from the bending portions 272 when expanding, thereby reducing the probability that the positive electrode sheet 25 and the negative electrode sheet 26 contact the separator 27 to cause the positive electrode sheet 25 and the negative electrode sheet 26 to bend, and reducing the probability that the positive electrode sheet 25 and the negative electrode sheet 26 cause the separator 27 to tear, thereby improving the reliability of the battery cell 20.

An embodiment of the present application provides a battery, including the battery cell 20 in any implementation.

By using the battery cell 20 in the embodiments of the present disclosure, the reliability of the battery may be improved.

An embodiment of the present application further provides an electric device, including the battery in any implementation, where the battery is configured to provide electric energy.

The technical solution of the present application will be further described below by a specific embodiment. As shown in FIG. 1 to FIG. 9, the battery cell 20 includes a positive electrode sheet 25, a negative electrode sheet 26, and a separator 27. The positive electrode sheet 25 includes a positive electrode active material area 251 and an insulating area 252 surrounding the positive electrode active material area 251; the negative electrode sheet 26 includes a negative electrode active material area 261 and a negative electrode empty foil area 262 surrounding the negative electrode active material area 261, and the negative electrode sheet 26 and the positive electrode sheet 25 are stacked along the first direction Y; and the separator 27 is located between any adjacent positive electrode sheet 25 and negative electrode sheet 26, where a projection of the negative electrode sheet 26 on a first plane 28 perpendicular to the first direction Y completely falls within a range of a projection of the positive electrode sheet 25 on the first plane 28, a projection of the positive electrode active material area 251 on the first plane 28 falls within a range of a projection of the negative electrode active material area 261 on the first plane 28, and a projection of the negative electrode empty foil area 262 on the first plane 28 completely falls within a range of a projection of the insulating area 252 on the first plane 28.

In some embodiments, the insulating area 252 is disposed along an edge of the positive electrode active material area 251 and is adjacent to the positive electrode active material area 251.

In some embodiments, the insulating area 252 includes a first region 2521 and a second region 2522 that are connected to each other, the insulating material of the first region 2521 is adjacent to the active material of the positive electrode active material area 251, and the insulating material of the second region 2522 covers the surface of the active material of the positive electrode active material area 251. The thickness D1 of the insulating material of the first region 2521 satisfies 20µm≤D1≤70µm; and the width W of the second region 2522 satisfies 0<W≤1mm, and the thickness D2 of the insulating material of the second region 2522 satisfies 0<D2≤5µm.

Along a width direction X of the battery cell 20, a shortest distance between an edge of the negative electrode sheet 26 and an edge of the positive electrode active material area 251 on a same side is L1, a longest distance between the edge of the negative electrode sheet 26 and the edge of the positive electrode sheet 25 is L2, and L1 is greater than L2; and/or along a length direction of the battery cell 20, a shortest distance between an edge of the negative electrode sheet 26 and an edge of the positive electrode active material area 251 on a same side is L3, a longest distance between the edge of the negative electrode sheet 26 and an edge of the positive electrode sheet 25 is L4, and L3 is greater than L4.

Along the first direction Y, the separator 27 is bent and extended to form a plurality of planar portions 271 and a plurality of bending portions 272, the planar portions 271 are located between the positive electrode sheet 25 and the negative electrode sheet 26 that are adjacent, and the bending portions 272 are located between two adjacent planar portions 271.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery cell, comprising:
a positive electrode sheet, comprising a positive electrode active material area;
a negative electrode sheet, comprising a negative electrode active material area, the negative electrode sheet and the positive electrode sheet being stacked along a first direction; and
a separator, located between any adjacent positive electrode sheet and negative electrode sheet,
wherein a projection of the negative electrode sheet on a first plane perpendicular to the first direction completely falls within the range of a projection of the positive electrode sheet on the first plane, and a projection of the positive electrode active material area on the first plane falls within the range of a projection of the negative electrode active material area on the first plane.

2. The battery cell according to claim 1, wherein the positive electrode sheet further comprises an insulating area surrounding a periphery of the positive electrode active material area; and
the negative electrode sheet further comprises a negative electrode empty foil area surrounding the negative electrode active material area, and a projection of the negative electrode empty foil area on the first plane completely falls within the range of a projection of the insulating area on the first plane.

3. The battery cell according to claim 2, wherein the insulating area is disposed along an edge of the positive electrode active material area and is adjacent to the positive electrode active material area.

4. The battery cell according to claim 2 or 3, wherein the insulating area comprises a first region and a second region that are connected, an insulating material in the first region is adjacent to an active material in the positive electrode active material area, and an insulating material in the second region covers a surface of the active material of the positive electrode active material area.

5. The battery cell according to claim 4, wherein a width W of the second region satisfies 0<W≤10mm.

6. The battery cell according to claim 5, wherein the width W of the second region satisfies 0<W≤1mm.

7. The battery cell according to any one of claims 4 to 6, wherein a thickness D1 of the insulating material in the first region satisfies 10µm≤D1≤250µm.

8. The battery cell according to claim 7, wherein the thickness D1 of the insulating material in the first region satisfies 20µm≤D1≤70µm.

9. The battery cell according to any one of claims 4 to 8, wherein a thickness D2 of the insulating material in the second region satisfies 0<D2≤30µm.

10. The battery cell according to claim 9, wherein the thickness D2 of the insulating material in the second region satisfies 0<D2≤5µm.

11. The battery cell according to any one of claims 1 to 10, wherein along a width direction of the battery cell, a shortest distance between an edge of the negative electrode sheet and an edge of the positive electrode active material area on a same side is L1, a longest distance between the edge of the negative electrode sheet and an edge of the positive electrode sheet is L2, and L1 is greater than L2;
and/or, along a length direction of the battery cell, a shortest distance between an edge of the negative electrode sheet and an edge of the positive electrode active material area on a same side is L3, a longest distance between the edge of the negative electrode sheet and an edge of the positive electrode sheet is L4, and L3 is greater than L4.

12. The battery cell according to any one of claims 1 to 11, wherein along the first direction, the separator is bent and extended to form a plurality of planar portions and a plurality of bending portions, the planar portions are located between the positive electrode sheet and the negative electrode sheet that are adjacent, and the bending portions are located between two adjacent planar portions.

13. A battery, comprising the battery cell according to any one of claims 1 to 12.

14. An electric device, comprising the battery according to claim 13, wherein the battery is configured to provide electric energy.
